(19) **Europäisches Patentamt**
**European Patent Office**
**Office européen des brevets**

(11) **EP 2 212 537 B1**

(12) **FASCICULE DE BREVET EUROPEEN**

(45) Date de publication et mention
de la délivrance du brevet:
**24.10.2012 Bulletin 2012/43**

(21) Numéro de dépôt: **08871464.7**

(22) Date de dépôt: **24.10.2008**

(51) Int Cl.:
*F02D 41/24* *(2006.01)*       *F02D 41/40* *(2006.01)*
*G01M 15/05* *(2006.01)*       *F02D 41/22* *(2006.01)*
*F02D 43/00* *(2006.01)*       *F02D 41/30* *(2006.01)*

(86) Numéro de dépôt international:
**PCT/FR2008/001507**

(87) Numéro de publication internationale:
**WO 2009/092880 (30.07.2009 Gazette 2009/31)**

(54) **PROCÈDE DE CONTRÔLE MOTEUR BASÉ SUR DES SIGNATURES GRAPHIQUES**

**VERFAHREN ZUM TESTEN VON MOTOREN AUF GRUNDLAGE GRAPHISCHER SIGNATUREN**

**METHOD OF TESTING ENGINES BASED ON GRAPHIC SIGNATURES**

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **30.10.2007 FR 0707702**

(43) Date de publication de la demande:
**04.08.2010 Bulletin 2010/31**

(73) Titulaire: **IFP Energies nouvelles
92852 Rueil-Malmaison Cedex (FR)**

(72) Inventeurs:
• **YOUSSEF, Bilal
  F-69100 Villeurbanne (FR)**
• **CORDE, Gilles
  F-92270 Bois-Colombes (FR)**

(56) Documents cités:
**EP-A- 0 398 481       EP-A- 1 134 386
WO-A-2005/021953    US-A- 5 361 628
US-A- 6 088 647**

## Description

La présente invention concerne le domaine du contrôle d'un moteur à combustion interne. Plus particulièrement, l'invention concerne un procédé permettant d'analyser des signaux issus de capteurs positionnés sur le moteur, de façon à extraire des informations pertinentes pour le contrôle du moteur.

Les moteurs à combustion interne deviennent de plus en plus complexes, et leurs commandes de plus en plus sophistiquées. Le contrôle moteur avancé, ainsi que les systèmes de diagnostic, ont besoin d'un retour d'informations détaillées concernant les différents événements se produisant à l'intérieur du moteur (injections, combustion...). La surveillance de ces évènements et la connaissance des paramètres moteurs qui en dépendent, permettent une amélioration considérable des performances du moteur et la réduction des émissions polluantes.

## État de la technique

Pour acquérir des informations pertinentes pour le contrôle du moteur, on connaît différentes méthodes.

On connaît par exemple les méthodes de reconstruction de la pression à l'intérieure des cylindres suivantes :

- J.Antoni, J. Danière, F. Guillet. « Effective vibration analysis of IC Engines using Cyclostationarity. Part I : A Methodology for Condition Monitoring », Journal of Sound and Vibration. Vol. 257, No. 5, Nov 2002, pp. 815-837.
- J.Antoni, J. Danière, F. Guillet, R.B. Randall. « Effective vibration analysis of IC Engines using Cyclostationarity. Part II : New Results on the Reconstruction of the Cylinder Pressure », Journal of Sound and Vibration. Vol. 257, No. 5, Nov 2002, pp. 839-856.

On connaît également des méthodes d'estimation des paramètres de combustion :

- J., Chauvin, Y., Bentolila and O., Grondin (2006). Méthode d'estimation de paramètres de combustion à partir de signaux vibratoires. Brevet 06/02 111. Institut Francais du pétrole.

- Rapid-Prototyping Multi-Sensors Processing Platform for Real Time Engine Control and Diagnosis, Olivier Grondin, Laurent Duval, Fabrice Guillemin, Stephan Ker, Gilles Corde, Christian Vigild. Fifth IFAC Symposium on Advances in Automotive Control Seascape Resort, Aptos, California, USA. August 2007.

Une difficulté inhérente à toutes ces méthodes, est liée à la complexité du signal qui porte un grand nombre d'informations. Certaines de ces informations sont directement liées au fonctionnement du moteur, d'autres indirectement, et enfin, certaines de ces informations constituent des perturbations, du bruit, ou encore un signal de fond.

L'acquisition d'informations pertinentes pour le contrôle moteur implique donc une analyse d'un signal complexe, de façon à extraire une information utile, c'est-à-dire une information liée au fonctionnement du moteur, parmi de nombreuses autres informations « parasites ». Le document EP 0398481 décrit un example de procédé de contrôle capable d'identifier un défaut de fonctionnement.

Compte tenu du fait que le contrôle moteur nécessite des applications en temps réel, il apparaît nécessaire que cette technique d'analyse soit simple, rapide et précise.

L'objet de l'invention est un procédé alternatif pour extraire des informations utiles pour le contrôle d'un moteur à combustion interne. Ce procédé est basé sur des signatures graphiques générées à partir de signaux hautes fréquences, issus de différents capteurs du moteur.

## Le procédé selon l'invention

L'invention concerne un procédé de contrôle d'un moteur à combustion interne comportant au moins un capteur, à partir duquel on acquiert au moins un signal contenant au moins une information relative au fonctionnement dudit moteur. Le procédé comporte les étapes suivantes :

- on choisit une fonction permettant de transformer un signal en une signature graphique, par projection de mesures du signal contenues dans une fenêtre temporelle glissante, d'un espace multidimensionnel dans un espace de dimension inférieure ; et pour chaque cycle moteur,

- on transforme ledit signal en une signature graphique à l'aide de ladite fonction ;

- on extrait ladite information à partir de ladite signature ; et

- on utilise ladite information pour contrôler ledit moteur.

L'information peut être extraite en réalisant les étapes suivantes :

- on sélectionne au moins un attribut de la signature ;

- on détermine une relation entre cet attribut et l'information ; et pour chaque cycle moteur,

- on calcule une valeur d'attribut pour la signature ;

- on extrait l'information à l'aide de la valeur et de la relation.

Lorsque le signal constitue un ensemble de mesures discrètes, et signature graphique peut être obtenue à l'aide d'une fonction permettant la projection de mesures du signal contenues dans une fenêtre temporelle glissante, d'un espace multidimensionnel dans un espace de dimension inférieure, par exemple de dimension deux. Pour ce faire, on peut réaliser les étapes suivantes, à chaque instant t :

- on construit un vecteur $Y_m(t)$ constitué d'une mesure à l'instant $t$, $y(t)$, et de $N$ mesures précédant l'instant t ;

- on transforme le vecteur $Y_m(t)$ en un couple ($y_1$, $y_2$) représentant un point dans un plan bidimensionnel.

La relation entre l'attribut et l'information, peut être obtenue à partir du procédé suivant, réalisé sur un banc d'essai moteur :

- on construit une signature graphique pour différentes valeurs de l'information ;

- on calcule ledit attribut pour chacune des signatures ;

- on déduit une relation en comparant les couples attribut / information pour chacune des signatures.

Selon un mode de réalisation, le signal est une mesure de pression dans une rampe commune équipant le moteur. L'information que l'on cherche à extraire pouvant être la détection d'une injection. Dans ce cas, on peut utiliser, comme attribut, la superficie de la signature. On détecte alors si une injection a lieu, en comparant la superficie de la signature à un seuil déterminé.

Selon un autre mode de réalisation, le signal est une mesure de régime instantané. L'information que l'on cherche à extraire pouvant être une estimation du couple moteur. Dans ce cas, on peut utiliser un attribut basé sur un diamètre horizontal et un diamètre vertical de la signature graphique.

D'autres caractéristiques et avantages du procédé selon invention, apparaîtront à la lecture de la description ci-après d'exemples non limitatifs de réalisations, en se référant aux figures annexées et décrites ci-après.

**Présentation succincte des figures**

- la figure 1 illustre les étapes de la méthode d'extraction des informations moteurs à partir des mesures hautes fréquences en utilisant des signatures graphiques.

- la figure 2 illustre le procédé de construction d'une signature graphique selon l'invention.

- la figure 3 montre un exemple de définition de points intermédiaires au cours de la construction d'une signature graphique.

- la figure 4 est un exemple de signatures obtenues à partir des mesures réelles de la pression dans la rampe, dans le cas de deux injections.

- la figure 5 est un exemple de signatures obtenues à partir des mesures réelles du régime instantané pour différentes valeurs de la PMI (N=1500rpm).

- la figure 6 illustre un exemple de corrélation entre la PMI et un attribut de la signature graphique.

- la figure 7 montre une estimation en ligne de la PMI en utilisant des attributs extraits de signature de la figue 5.

**Description détaillée du procédé**

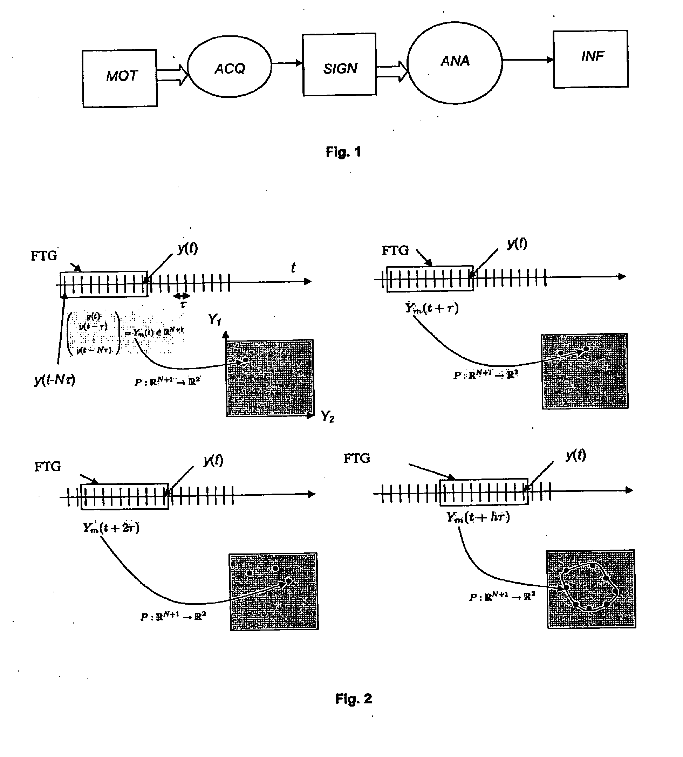

La figure 1 décrit le procédé d'extraction des informations moteurs à partir de mesures issues de capteurs. Le procédé comporte quatre étapes :

1- Acquisition de signaux issus de capteurs (*ACQ*)

2- Construction d'une signature graphique (*SIGN*)

3- Détermination d'attributs corrélés, par analyse de la signature graphique (*ANA*)

4- Extraction d'information (*INF*)

1- Acquisition de signaux issus de capteurs (*ACQ*)

On équipe un moteur (*MOT*) à combustion interne de différents capteurs. Il peut s'agir, par exemple, de capteurs de pression placés à l'intérieur des cylindres, de capteurs de régime instantané positionnés sur l'arbre du moteur, de capteurs de pression de rampe pour un moteur équipé d'une rampe commune (« common rail » ), ...
Préférentiellement, on mesure des signaux hautes fréquences (chaque 6 degrés vilebrequin, 1 degré vilebrequin...).
Ces signaux contiennent une information relative au fonctionnement du moteur parmi d'autres informations dites « parasites ». Il peut s'agir d'information concernant un évènement, telle que l'occurrence d'une injection. Il peut également s'agir d'information concernant la connaissance d'un paramètre moteur, tel que le couple. Le but est alors d'extraire cette information. Pour ce faire, on utilise des signatures graphiques.

2- Construction d'une signature graphique (*SIGN*)

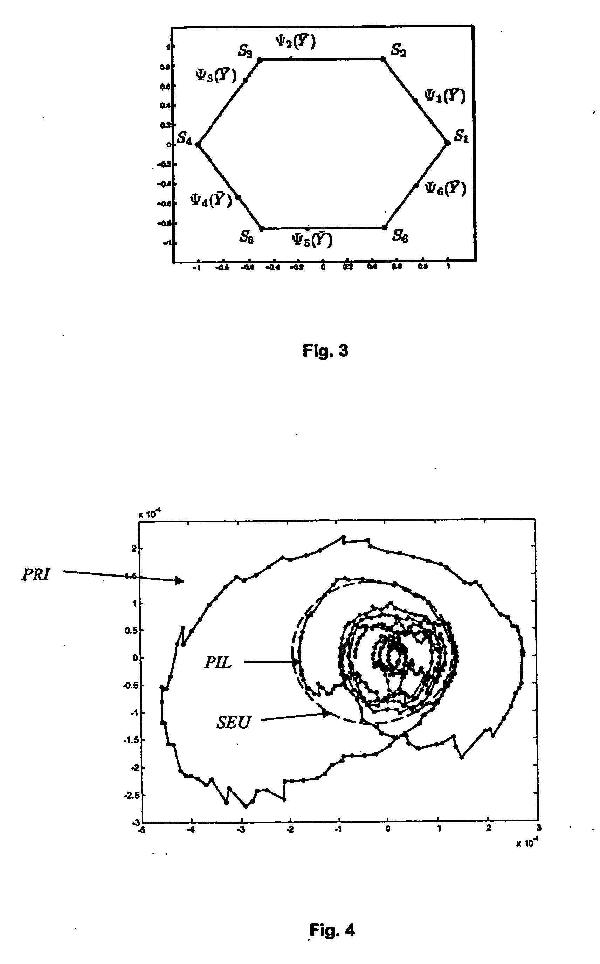

On appelle signature un ensemble de traits caractéristiques et reconnaissables permettant d'attribuer une chose à une autre. Dans le cadre de notre invention, il s'agit d'un ensemble de traits caractéristiques et reconnaissables, permettant d'attribuer quelque chose à un évènement particulier, lié au fonctionnement d'un moteur à combustion interne.
Selon l'invention, on construit une signature graphique. Il s'agit d'une signature dont l'ensemble des traits caractéristiques et reconnaissables sont représentés sous forme d'un graphique.
Ce graphique se compose d'un ensemble de points, formant de façon discrète, une forme géométrique. Un exemple est donné figure 4, où un trait continu est ajouté entre les points pour des raisons d'affichage.
Ces signatures sont obtenues à l'aide d'une fonction permettant de transformer un signal en une signature graphique. Le spécialiste connaît plusieurs techniques pour y parvenir.
Selon un mode préféré de réalisation, les signatures sont obtenues à l'aide d'une fonction permettant une projection des mesures obtenues en ligne (en temps réel) et contenues dans une fenêtre temporelle glissante, d'un espace multidimensionnel dans un espace de dimension inférieure (le plan 2D selon un exemple). Cette réduction de dimension permet une analyse plus aisée du signal.
La figure 2 illustre la méthode pour construire une signature graphique *2D*. Une signature est associée à un cycle moteur et à au moins un signal (*y*). Pour construire une telle signature graphique, on réalise les étapes suivantes pour chaque cycle :

• A chaque instant *t*, on construit un vecteur $Y_m(t)$ constitué de la mesure présente *y(t)* et des *N* mesures passées :

$$Y_m(t) = \begin{pmatrix} y(t) \\ y(t-\tau) \\ \vdots \\ y(t-N\tau) \end{pmatrix} \in \mathbb{R}^{N+1}$$

On appelle vecteur, une grandeur caractérisée, dans un espace à *n* dimensions, par *n* grandeurs scalaire disposées dans un ordre donné. Il s'agit donc ici d'un (N+1)-uplet

L'entier *N* est appelé « ordre de la signature ». La fenêtre temporelle glissante (*FTG*) est définie par l'intervalle de temps (*t - N. r ; t*). Le paramètre $\tau$ représente l'intervalle de temps entre deux mesures du signal *y*.

• Puis, on transforme le vecteur $Y_m(t)$ en un couple $(y_1, y_2)$ représentant un point dans un plan 2D $(Y_1 ; Y_2)$, appelé le plan de la signature. Cette transformation est réalisée à l'aide d'une application $P : \mathbb{R}^{N+1} \to \mathbb{R}^2$.

• Ainsi, comme il est montré à la figure 2, lorsque le temps avance, des vecteurs successifs $Y_m(t), Y_m(+\tau),........, Y_m(t+4\tau),...$ sont obtenus. A chacun d'entre eux, l'application $P$ associe un point dans le plan de la signature. Il en résulte donc une signature graphique en deux dimensions.

<u>Définition de l'application *P*</u>

Rappelons qu'à chaque instant *t*, les mesures contenues dans une fenêtre temporelle glissante (*FTG*) sont utilisées pour constituer le vecteur de mesure suivant :

$$Y_m(t) = \begin{pmatrix} y(t) \\ Y(t) \end{pmatrix} \in \mathbb{R}^{N+1} \quad ; \quad Y(t) = \begin{pmatrix} y(t-\tau) \\ \vdots \\ y(t-N\tau) \end{pmatrix} \in \mathbb{R}^N$$

Afin d'associer un point dans le plan de la signature à chaque vecteur $Y_m(t)$, les étapes suivantes sont effectuées :

a) Le vecteur de mesures passées $Y(t)$ est d'abord normalisé afin d'obtenir le vecteur normalisé $\overline{Y}(t)$ suivant :

$$\overline{Y}(t) = \frac{Y(t)}{\|Y\|_\infty + \varepsilon} \in [-1, 1]^N \quad ; \quad \|Y\|_\infty = \max_{i \in \{1,...,N\}} |Y_i|$$

où e est une constante de régularisation fixe.

b) Une application associant à chaque point de l'hyper-cube [-1,+1]$^N$ est ensuite définie comme suit

$$\Psi : [-1 \; 1]^N \to \mathbb{R}^2 \times \ldots \times \mathbb{R}^2 = (\mathbb{R}^2)^N$$

$$\Psi(\overline{Y}) = (\Psi_1(\overline{Y}), \ldots, \Psi_N(\overline{Y})) \; ; \; \Psi_i(\overline{Y}) \in \mathbb{R}^2$$

avec

$$\Psi_i(\overline{Y}) = \frac{1}{2}[(1 + \overline{Y}_i)S_{(i+1|N)} - (\overline{Y}_i - 1)S_i]$$

où

$$(i+1|N) = (i+1) Modulo\ N$$

$S_j$ : $image(e^{2j}(i\text{-}1)^N)$ ; $j^2 = -1$
où « image » signifie le point image de ce nombre complexe, c'est-à-dire le point qui lui correspond dans le plan 2D.
La figure 3 montre un exemple des positions des points $\Psi_i(\overline{Y})$, dans le cas particulier où le vecteur normalisé est donné par :

$$N = 6, \quad \overline{Y} = (0, 0.5, -0.5, 0.25, -0.25, 0)^T$$

c) Les points intermédiaires $\Psi_i(\overline{Y})$ sont ensuite utilisés pour calculer les deux points suivants dans le plan de signature :

$$\Phi_0(\overline{Y}) = \frac{1}{N} \sum_{j=1}^{N} \Psi_j(\overline{Y})$$

$$\Phi_1(\overline{Y}) = \frac{1}{N} \sum_{i=1}^{N} \overline{Y}_j \Psi_j(\overline{Y})$$

Il s'agit des centres de masse (respectivement pondérés où non) des points intermédiaires précédemment calculés. L'application $P$ est alors donnée par

$$P : \mathbb{R}^N \times \mathbb{R} \to \mathbb{R}^2$$
$$(\overline{Y}, y) \to \Phi_0(\overline{Y}) + \left[ \frac{y}{\|\overline{Y}\|_\infty + \varepsilon} - \frac{1}{N} \sum_{i=1}^{N} \overline{Y}_i \right] \left[ \Phi_1(\overline{Y}) - \Phi_0(\overline{Y}) \right]$$

On note que le vecteur $(\overline{Y}, y)$ est obtenu à partir du vecteur des mesures $Y_m$ moyennant l'application de la procédure de normalisation sur ces derniers $N$ composantes.
Ceci définit complètement l'application permettant d'associer à chaque vecteur de mesures $Ym(t)$ (construit à l'instant $t$ avec les mesures passées enregistrées sur une fenêtre glissante) un point du plan de la signature.

*Exemple de résultats*

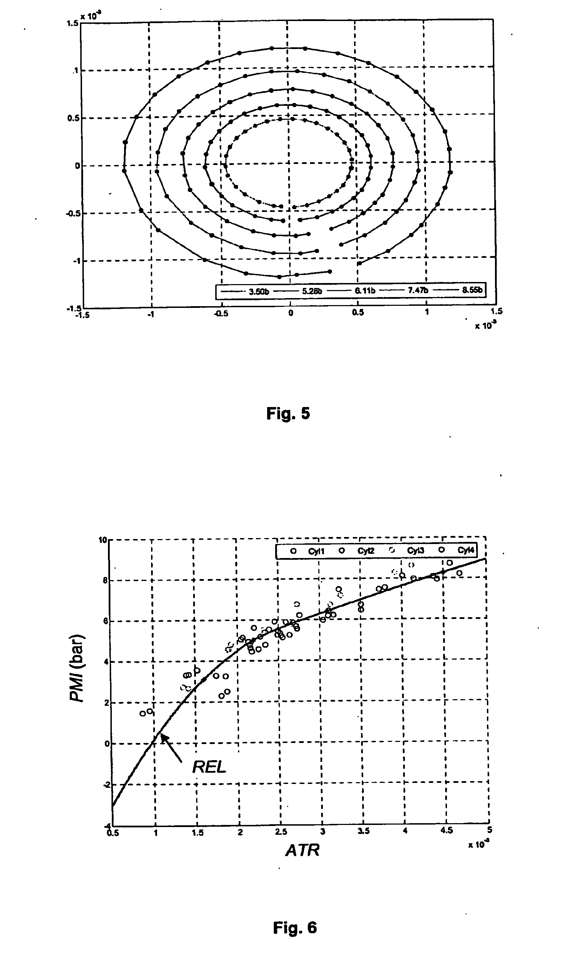

Les figures 4 et 5 illustrent des signatures graphiques obtenues à partir de la méthode selon l'invention.

La figure 4 illustre une signature obtenue à partir des mesures réelles de la pression dans la rampe dans le cas de deux injections.

La figure 5 illustre des signatures obtenues à partir des mesures réelles du régime instantané pour différentes valeurs de la PMI (N=1500rpm)

3- <u>Détermination d'attributs corrélés, par analyse de la signature graphique</u> *(ANA)*

Pour chaque signal issu d'un capteur, et pour chaque cycle, on génère ainsi une signature graphique. Une signature graphique conduit alors à une présentation de l'information issue du capteur. Cette signature graphique représente une forme, constituée de plusieurs points (un point pour chaque mesure de signal, en fait chaque point correspond à un ensemble de N+1 mesures). Cette forme possède de nombreux attributs.

On cherche alors, parmi ces attributs caractérisant la signature graphique, des attributs corrélés avec une information liée au fonctionnement du moteur (évènement, paramètre moteur). Pour ce faire, on utilise un banc moteur, sur lequel on réalise différents essais :

- on construit une signature graphique pour différentes valeurs de l'information ;

- on détermine des attributs qui évoluent en fonction de la valeur de l'information.

Si la forme issue de la signature graphique possède des caractéristiques géométriques précises, s'il s'agit d'un cercle par exemple, on peut alors directement calculer des attributs : diamètre, surface, périmètre, ... ou des combinaisons de plusieurs attributs. Ces attributs sont préférentiellement calculés en n'utilisant que les points constituant la signature, et non à partir de courbe joignant les points.

Des exemples sont donnés ci-après.

4- <u>Extraction d'information utile au contrôle d'un moteur</u> (*INF*)

Ces attributs corrélés permettent de détecter des événements, tels que l'injection, ou d'estimer des paramètres, tels que la PMI.

Il s'agit dans cette étape d'exploiter le ou les attributs des signatures graphiques, de façon à fournir une information utile au contrôle d'un moteur.

L'information peut être extraite

- soit directement, c'est-à-dire directement à partir de la valeur de l'attribut, en fonction de sa valeur, ou en comparant la valeur de l'attribut avec un seuil défini ;

- soit indirectement, en définissant au préalable une relation permettant d'estimer l'information à partir de la valeur de l'attribut.

Pour déterminer une relation entre un attribut et une information, on peut réaliser les étapes suivantes sur un banc d'essai moteur :

- on construit une signature graphique pour différentes valeurs de l'information ;

- on calcule l'attribut pour chacune des signatures ;

- on déduit la relation en comparant les couples attribut / information pour chacune des signatures.

Le procédé proposé s'implémente facilement dans la structure classique du contrôle moteur et peut être exploitée en temps réel.

**Applications du procédé d'extraction d'information**

I- <u>Détection des injections pilotes à partir des mesures de la pression dans la rampe</u>

Le système d'injection à rampe commune (« common rail ») est un système d'injection haute pression qui permet de produire la quantité de carburant demandée suivant diverses stratégies d'injections (multi-injections). Une injection pilote de faible durée précède l'injection principale. Cette injection pilote est utilisée pour réduire les bruits de combustion, notamment lors du démarrage à froid. Due à sa faible durée, l'injection pilote ne se réalise pas toujours. Dans certaines conditions, l'injecteur est commandé mais aucune quantité de carburant n'est injectée. Cette absence d'injection influe sur le contrôle moteur.

Par conséquent, la détection de l'injection pilote permet d'améliorer les performances du moteur.

Dans ce contexte, on utilise les signatures graphiques générées à partir des mesures de la pression dans la rampe pour détecter la présence ou l'absence des injections pilotes.

La figure 4, illustre un exemple de signatures graphiques obtenues selon l'invention, à partir de mesures de la pression dans la rampe. On observe divers ensembles de points qui forme chacun une forme relativement circulaire. On observe au banc moteur, que l'injection principale (PRI) correspond au cercle le plus grand. L'injection pilote (*PIL*) se réalise lorsque le cercle à une taille supérieure au cercle en pointillé (*SEU*). Ce cercle (*SEU*) constitue un seuil. Il est défini sur banc moteur, puis il est implémenté pour constituer une détection de l'injection pilote, en comparaison avec les signatures graphiques.

Concrètement, lors du fonctionnement sur véhicule, on calcule à chaque cycle une signature que l'on compare avec le seuil (qui peut être exprimé de façon analytique). On peut par exemple considérer que l'injection pilote a lieu si la superficie de la signature graphique est supérieure à celle du seuil.

II- Estimation du couple moteur à partir des mesures du régime instantané

La connaissance du couple fourni par la combustion à l'intérieur de chaque cylindre est un élément essentiel dans le domaine du contrôle moteur. Cependant, pour des raisons de coût et de faisabilité, les véhicules actuels ne sont pas dotés d'un capteur adapté à cette mesure directe. En revanche, la mesure du régime moteur instantané, contenant une information sur le couple moteur, est disponible.

On utilise les mesures disponibles du régime instantané pour en déduire le couple correspondant. Plusieurs méthodes existent dans la littérature pour estimer le couple moteur à partir du régime instantané. Par exemple, on peut utiliser la méthode de déconvolution dans le domaine fréquentiel, ou des méthode basées sur des observateurs.

Selon l'invention, on se base sur les signatures graphiques afin d'obtenir une information quantitative sur le couple fourni par chacun des cylindres. Comme la signature est générée à partir des mesures du régime instantané, contenant une information sur le couple, elle sera sensible à ce dernier.

On recherche donc une corrélation entre la signature obtenue et la valeur du couple pour extraire de la signature des attributs utiles pour l'estimation du couple.

La figure 5 illustre des signatures obtenues à partir des mesures réelles du régime instantané pour différentes valeurs de la pression moyenne indiquée (PMI). La signature permet d'avoir une information quantitative sur la PMI, et par conséquent sur le couple fourni par chaque cylindre à partir du régime instantané. En effet, le couple et la PMI sont liés par la relation suivante:

$$PMI = \pi.\frac{C}{V_{cyl}}$$

où la PMI est exprimée en bar, le couple C en N.m, et le volume cylindre ($V_{cyl}$) en litre.

On constate que la taille des ellipsoïdes que forment les points des différentes signatures, est corrélée avec la PMI. En effet, plus la PMI augmente, plus l'ellipsoïde est grande.

On définit alors l'attribut *ATR* de signature suivant : diamètre horizontal + diamètre verticale. Cet attribut est calculé en sommant la différence des abscisses des deux points aux extrémités horizontales, avec la différence des ordonnées des deux points aux extrémités verticales de la signature :

$$\text{diamètre horizontal} = \max(xi)\text{-}\min(xi)$$

$$\text{diamètre verticale} = \max(yi)\text{-}\min(yi)$$

$$ATR = \max(xi) - \min(xi) + \max(yi) - \min(yi)$$

La figure 6 montre la corrélation entre la PMI et l'attribut *ATR* de la signature graphique. La ligne continue (*REL*) est une estimation d'une relation entre la PMI et l'attribut *ATTR* extrait de signature de la figure 5.

Ainsi, dans le cadre d'un contrôle moteur pour un véhicule en marche, on calcule la signature graphique à partir des mesures réelles du régime instantané, puis on calcule l'attribut *ATR*, puis on applique la relation *REL* pour estimer la PMI.

Le procédé basé sur des signatures graphiques peut être appliqué facilement en temps réel, étant donné que le coût du calcul de la signature est faible (simples opérations arithmétiques), au regard des algorithmes d'optimisation ou de filtrage complexe.

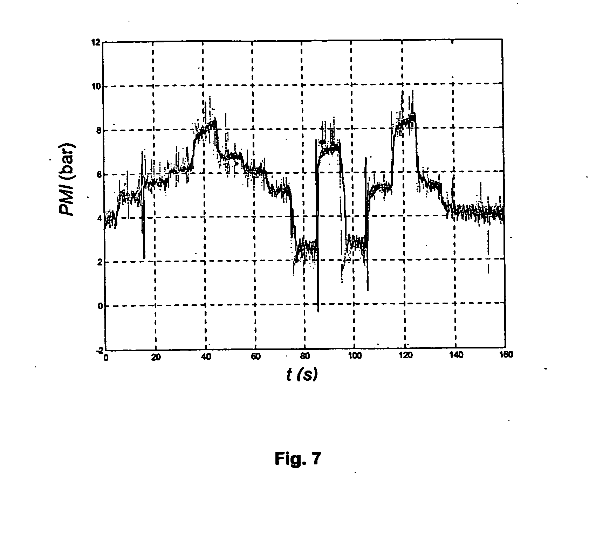

La figure 7 montre un résultat d'une estimation en ligne de la PMI, en utilisant des attributs extraits d'une signature de la figure 5 en temps réel. La courbe claire indique la valeur réelle de la PMI, alors que la courbe foncée représente l'estimation.

## Revendications

1. Procédé de contrôle d'un moteur à combustion interne comportant au moins un capteur, à partir duquel on acquiert au moins un signal contenant au moins une information relative au fonctionnement dudit moteur et constitué d'un ensemble de mesures discrètes, **caractérisé en ce qu'**il comporte les étapes suivantes :

   - on choisit une fonction permettant de transformer un signal en une signature graphique, par projection de mesures du signal contenues dans une fenêtre temporelle glissante, d'un espace multidimensionnel dans un espace de dimension inférieure ; et pour chaque cycle moteur,
   - on transforme ledit signal en une signature graphique à l'aide de ladite fonction ;
   - on extrait ladite information à partir de ladite signature ; et
   - on utilise ladite information pour contrôler ledit moteur.

2. Procédé selon la revendication 1, dans lequel on extrait ladite information en réalisant les étapes suivantes :

   - on sélectionne au moins un attribut de ladite signature ;
   - on détermine une relation entre ledit attribut et ladite information ; et pour chaque cycle moteur,
   - on calcule une valeur dudit attribut pour ladite signature ; et
   - on extrait ladite information à l'aide de ladite valeur et de ladite relation.

3. Procédé selon l'une des revendications précédentes, dans lequel l'espace de dimension inférieure est de dimension 2.

4. Procédé selon l'une des revendications précédentes, dans lequel la signature graphique est obtenue en réalisant les étapes suivantes, à chaque instant *t* :

   - on construit un vecteur $Y_m(t)$ constitué d'une mesure à l'instant *t*, *y(t)*, et de *N* mesures précédant l'instant *t* ;
   - on transforme le vecteur $Y_m(t)$ en un couple $(y_1, y_2)$ représentant un point dans un plan bidimensionnel.

5. Procédé selon l'une des revendications 2 à 4, dans lequel on détermine ladite relation entre ledit attribut et ladite information, en réalisant les étapes suivantes sur un banc d'essai moteur :

   - on construit une signature graphique pour différentes valeurs de l'information ;
   - on calcule ledit attribut pour chacune des signatures ;
   - on déduit une relation en comparant les couples attribut / information pour chacune des signatures.

6. Procédé selon l'une des revendications précédentes, dans lequel ledit signal est une mesure de pression dans une rampe commune équipant ledit moteur.

7. Procédé selon la revendication 6, dans lequel l'information correspond à la détection d'une injection.

8. Procédé selon la revendication 7, dans lequel ledit attribut est une superficie de la signature.

9. Procédé selon la revendication 8, dans lequel on détecte ladite injection, en comparant la superficie de la signature à un seuil déterminé.

10. Procédé selon l'une des revendications 1 à 5, dans lequel ledit signal est une mesure de régime instantané.

**11.** Procédé selon la revendication 10, dans lequel l'information est un couple moteur.

**12.** Procédé selon l'une des revendications 10 et 11, dans lequel ledit attribut est fonction d'un diamètre horizontal et d'un diamètre vertical de ladite signature graphique.

**Claims**

**1.** A method for controlling an internal-combustion engine comprising at least one detector, from which at least one signal containing at least one piece of information relative to the operation of said engine and consisting of a set of discrete measurements is acquired, **characterized in that** it comprises the following stages:

- selecting a function allowing a signal to be converted to a graphic signature, by projection of signal measurements contained in a sliding time window, from a multidimensional space to a space of smaller dimension ; and, for each engine cycle,
- converting said signal to a graphic signature by means of said function,
- extracting said information from said signature, and
- using said information to control said engine.

**2.** A method as claimed in claim 1, wherein said information is extracted by carrying out the following stages:

- selecting at least one attribute of said signature,
- determining a relation between said attribute and said information; and, for each engine cycle,
- calculating a value of said attribute for said signature, and
- extracting said information by means of said value and of said relation.

**3.** A method as claimed in any one of the previous claims, wherein the space of smaller dimension is of dimension 2.

**4.** A method as claimed in any one of the previous claims, wherein the graphic signature is obtained by carrying out the following stages, at any time $t$:

- constructing a vector $Y_m(t)$ consisting of a measurement at time $t$, $y(t)$, and of $N$ measurements preceding time $t$,
- converting vector $Y_m(t)$ to a pair $(y_1, y_2)$ representing a point in a two-dimensional plane.

**5.** A method as claimed in any one of claims 2 to 4, wherein said relation between said attribute and said information is determined by carrying out the following stages on an engine test bench:

- constructing a graphic signature for different information values,
- calculating said attribute for each signature,
- deducing a relation by comparing the attribute/information pairs for each signature.

**6.** A method as claimed in any one of the previous claims, wherein said signal is a pressure measurement in a common rail said engine is equipped with.

**7.** A method as claimed in claim 6, wherein the information corresponds to the detection of an injection.

**8.** A method as claimed in claim 7, wherein said attribute is a surface area of the signature.

**9.** A method as claimed in claim 8, wherein said injection is detected by comparing the surface area of the signature with a predetermined threshold.

**10.** A method as claimed in any one of claims 1 to 5, wherein said signal is an instantaneous engine speed measurement.

**11.** A method as claimed in claim 10, wherein the information is an engine torque.

**12.** A method as claimed in any one of claims 10 and 11, wherein said attribute depends on a horizontal diameter and a vertical diameter of said graphic signature.

**Patentansprüche**

1. Verfahren zum Steuern eines Verbrennungsmotors, der mindestens einen Sensor aufweist, von welchem ausgehend man mindestens ein Signal erfasst, das mindestens eine Information in Zusammenhang mit dem Funktionieren des Motors enthält und aus einer Einheit diskreter Mossungen besteht, **dadurch gekennzeichnet, dass** es die folgenden Schritte aufweist:

   - Auswahl einer Funktion, die es erlaubt, ein Signal in eine grafische Signatur durch Projizieren von Messungen des Signals, die in einem gleitenden Zeitfenster enthalten sind, von einem multidimensionalen Raum in einen Raum mit niedrigerer Dimension umzuwandeln; und für jeden Motorzyklus
   - Umformen des Signals in eine grafische Signatur mit Hilfe der Funktion;
   - Extraktion der Information ausgehend von der Signatur und
   - Gebrauch der Informationen zum Steuern des Motors.

2. Verfahren nach Anspruch 1, bei dem man die Information extrahiert, indem man die folgenden Schritte ausführt:

   Auswahl mindestens eines Attributs der Signatur;
   - Bestimmen einer Beziehung zwischen dem Attribut und der Information, und für jeden Motorzyklus
   - Berechnung eines Werts des Attributs für die Signatur und
   - Extraktion der Information mit Hilfe des Werts und der Beziehung.

3. Verfahren nach einem der vorhergehenden Anspruche, bei dem der Raum mit niedrigerer Dimension die Dimension 2 hat,

4. Verfahren nach einem der vorhergehenden Ansprüche, bei dem die grafische Signatur durch Durchführen der folgenden Schritte in jedem Augenblick t erzielt wird:

   - Konstruktion eines Vektors $Y_m(t)$, der aus einer Messung in dem Augenblick $t$, $y(t)$ besteht, und von $N$ Messungen, die dem Augenblick $t$ vorausgehen:
   - Umformen des Vektors $Y_m(t)$ in ein Moment $(y_1, y_2)$, das einen Punkt in einer zweidimensivnalen Ebene darstellt.

5. Verfahren nach einem der Ansprüche 2 bis 4, bei dem man die Beziehung zwischen dem Attribut und der Information bestimmt, indem man die folgenden Schritte auf einem Motorprüfstand ausführt:

   - Konstruktion einer grafische Signatur für unterschiedliche Werte der Information;
   - Berechnung des Attributs für jede der Signaturen;
   - Ableiten einer Beziehung, indem man die Paare Attribut/Information für jede der Signaturen vergleicht.

6. Verfahren nach einem der vorhergehenden Ansprüche, bei dem das Signal eine Druckmessung in einer gemeinsamen Kraftstoffleitung, die den Motor ausstattet, ist.

7. Verfahren nach Anspruch 6, bei dem die Information dem Erfassen einer Injektion entspricht.

8. Verfahren nach Anspruch 7, bei dem das Attribut eine Fläche der Signatur ist.

9. Verfahren nach Anspruch 8, bei dem man die Injektion erfasst, indem man die Fläche der Signatur mit einem bestimmten Schwellenwert vergleichs.

10. Verfahren nach einem der Ansprüche 1 bis 5, bei dem das Signal eine Messung der Mornentandrehzahl ist.

11. Verfahren nach Anspruch 10, bei dem die Information ein Motordrehmoment ist.

12. Verfahren nach einem der Ansprüche 10 und 11, bei dem das Attribut von einem horizontalen Durchmesser und einem vertikalen Durchmesser der grafischen Signatur abhängt.

**Fig. 1**

**Fig. 2**

**Fig. 3**

**Fig. 4**

**Fig. 5**

**Fig. 6**

**Fig. 7**

## RÉFÉRENCES CITÉES DANS LA DESCRIPTION

**Documents brevets cités dans la description**

- FR 0602111

- EP 0398481 A

**Littérature non-brevet citée dans la description**

- **J.ANTONI ; J. DANIÈRE ; F. GUILLET.** Effective vibration analysis of IC Engines using Cyclostationarity. Part I : A Methodology for Condition Monitoring. *Journal of Sound and Vibration,* Novembre 2002, vol. 257 (5), 815-837
- **J.ANTONI ; J. DANIÈRE ; F. GUILLET ; R.B. RANDALL.** Effective vibration analysis of IC Engines using Cyclostationarity. Part II : New Results on the Reconstruction of the Cylinder Pressure. *Journal of Sound and Vibration,* Novembre 2002, vol. 257 (5), 839-856

- **OLIVIER GRONDIN ; LAURENT DUVAL ; FABRICE GUILLEMIN ; STEPHAN KER ; GILLES CORDE ; CHRISTIAN VIGILD.** Rapid-Prototyping Multi-Sensors Processing Platform for Real Time Engine Control and Diagnosis. *Fifth IFAC Symposium on Advances in Automotive Control Seascape Resort, Aptos, California, USA,* Août 2007